# EUROPÄISCHE PATENTANMELDUNG

(11) **EP 1 083 760 A2**
(43) Veröffentlichungstag der Anmeldung: **14.03.2001**
(21) Anmeldenummer: 00118991.9
(22) Anmeldetag: 01.09.2000
(51) Int. Cl.: H04Q 7/22

(54) **Verfahren und Anordnung zur Nachrichten- und Datenübermittlung über ein zellulares Mobilfunktelekommunikationsnetz**

(30) Priorität: 09.09.1999 DE 19943151
(71) Anmelder: Ingenieurbüro für Umweltelektronik und Automatisierung ENZ, 12489 Berlin (DE)
(72) Erfinder: Enz, Fred, 12487 Berlin (DE); Franz, René, 12524 Berlin (DE)
(74) Vertreter: Kruspig, Volkmar, Dipl.-Ing.

(57) **Zusammenfassung**

Die Erfindung betrifft ein Verfahren und eine Anordnung zur Nachrichten- und Daten-Übermittlung über ein zellulares Standardmobilfunk-Telekommunikationsnetz, insbesondere GSM-System, mit einem Sender- oder Sender- und Empfänger-Mobilfunkmodul, wobei betriebssystemunabhängig druckertypische Standardzeichen, enthaltend die jeweilige Nachricht und die Teilnehmernummer des Empfängers, mittels einer entsprechenden üblichen Schnittstelle auf ein Interface geführt werden, wobei weiterhin die ausgangsseitig des Interface anliegenden Zeichen durch einen Controller in ein SMS-Format des jeweiligen Netzes codiert und über das Mobilfunkmodul an mindestens einen Teilnehmer gesendet werden. Weiterhin besteht die Erfindung darin, ein Verfahren zur optimierten Nachrichten- und Daten-Übermittlung anzugeben, wobei die Übertragungsqualität einer ersten Hauptübertragungsstrecke überwacht wird und beim Erkennen eines Datenübertragungsausfalls automatisch mindestens eine zweite Übertragungsstrecke zu aktivieren ist, wobei dann die Datenquelle und die Datensenke auf die zweite Übertragungsstrecke geschaltet sind.

## Beschreibung

Die Erfindung betrifft ein Verfahren und eine Anordnung zur Kurznachrichten-Übermittlung über ein zellulares Standardmobilfunk-Telekommunikationsnetz, insbesondere GSM-System, mit einem Sender- oder Sender- und Empfänger-Mobilfunkmodul gemäß Oberbegriff des Patentanspruchs 1, 6, 8 bzw. 12.

In den letzten Jahren wurden weltweit verschiedene, in einem jeweiligen Standard arbeitende globale Mobilfunk-Kommunikationssysteme, gestützt auf einzelne zellulare Stationen, erstellt und in Betrieb genommen. Geographisch nahezu jeder Punkt kann über ein solches Netz erreicht werden, wobei die Mobilfunkmodule bedingt durch sogenanntes Roaming, aber auch durch Weiterleitung von Netz zu Netz selbst nur über eine relativ geringe Senderleistung bzw. Empfindlichkeit der eingesetzten Empfänger verfügen müssen.

Die im GSM-Standard (Global System for Mobile Communications) für den digitalen Mobilfunk aufgenommenen Regelungen betreffen u.a. die Protokoll-Architektur der Signalisierungsebene. An der Luftschnittstelle beinhaltet in der Signalisierungsebene die unterste Schicht des Protokollmodells die Realisierung der logischen Signalisierungskanäle wie TDMA, FDMA, Multiframes, Kanalcodierung und so weiter. Der weitere Transport der Signalisierungsnachrichten über die entsprechenden Schnittstellen erfolgt wie die Nutzdatenübertragung über digitale Verbindungen.

In den logischen Kanälen der Luftschnittstelle kann auf der sogenannten Schicht 2 in der Signalisierungsebene jeweils eine Instanz des Sicherungsprotokolls LAPDm (Link Access Procedure auf den Dm-Kanälen) etabliert werden. Die LAPDm-Dienste werden mobilstationsseitig von der Schicht 3 der Signalisierungsprotokoll-Architektur genutzt. Diese Schicht 3 weist sogenannte Sublayer auf. Die Sublayer bilden auf der Seite der Mobilstation eine entsprechende Protokoll-Architektur, auch umfassend das sogenannte Connection Management CM. Das Connection Management ist in Protokollinstanzen untergliedert, nämlich die Instanzen Rufsteuerung (Call Controll CC), Zusatzdienstsignalisierung (Supplementary Service SS) und Kurznachrichtensignalisierung (Short Message Service SMS).

Demnach können über Mobiltelefone auch Kurznachrichten in Form von Texten empfangen und versendet werden. Je nach den einzelnen Mobilfunk-Betreibern können die Kurznachrichten bis zu 160 Zeichen lang sein und es besteht die Möglichkeit, diese Nachrichten von Mobiltelefon zu Mobiltelefon, per Modem, aber auch aus dem Internet zu verschicken. Unter Umständen nachteilig ist es, daß bei SMS-Nachrichten keine Empfangsbestätigung erfolgt. Wird die Nachricht nach vorgegebener Zeit gelöscht, weil das Empfängertelefon nicht erreichbar war, gilt die entsprechende Botschaft als verloren, dabei wird weder der Sender noch der Empfänger über das Löschen der SMS-Nachricht informiert.

Die jeweiligen Kurznachrichten müssen mehr oder weniger aufwendig manuell, z.B. über die Telefontastatur oder mit Hilfe eines anschließbaren Labtop eingegeben werden. Damit ist es nicht ohne weiteres möglich, Datenfernabfragen von z.B. Füllständen, Temperaturmeßwerten oder sonstigen Nachrichten, die im Standarddruckformat, z.B. im ASCII-Format vorliegen, als SMS-Botschaft oder -Nachricht zu versenden und/oder für eine Quittierung der empfangenen Nachricht oder Umschaltung auf einen weiteren Teilnehmer bei Unmöglichkeit der Sendung Sorge zu tragen.

Bei klassischen seriellen Datenübertragungseinrichtungen, die in drahtgebundener oder drahtloser Weise aufgebaut werden, können bidirektionale Daten entsprechend der Leitungskapazität bzw. Qualität der Übertragungsstrecke übertragen werden. Es hat sich jedoch gezeigt, daß in vielen Fällen die eigentliche Übertragungsstrecke nur eine fehlerbehaftete Datenübermittlung gestattet, wobei die Gefahr besteht, daß nicht nur Daten verfälscht, sondern auch die Übertragung temporär vollständig ausfallen kann. Beispielsweise kann bei einer Funk-Datenübertragung die Überschreitung der maximalen Reichweite bei einer beweglich vorgesehenen Station zu einem Datenausfall führen, so daß eine sichere Datenübertragung nicht oder nicht unter allen Umständen gewährleistet ist.

Es ist daher Aufgabe der Erfindung, ein Verfahren und eine Anordnung zur Nachrichten- und Daten-Übermittlung über ein zellulares Standardmobilfunk-Telekommunikationsnetz, insbesondere GSM-System, mit einem Mobilfunkmodul anzugeben, das bzw. die es gestattet, in besonders einfacher Weise über physikalische Standardschnittstellen, z.B. RS232 oder RS485 bzw. Centronics, USB und weitere entsprechende Informationen automatisch abzusetzen, ohne daß eine manuelle Dateneingabe oder ein entsprechendes Formulieren der Nachrichten erforderlich wird.

Eine weitere Aufgabe der Erfindung besteht darin, ein quasi duales System zu schaffen, mit dem eine Nachrichten- und Daten-Übermittlung über eine Datenübertragungsstrecke unter Nutzung kommerzieller Komponenten bei unterschiedlichen Betriebsbedingungen kostengünstig aufrechterhalten werden kann, wobei die zur sicheren Datenübertragung notwendige Qualität erhalten bleibt.

Die Lösung der Aufgabe der Erfindung erfolgt verfahrensseitig mit einer Lehre nach Patentanspruch 1 bzw. 8 sowie mit einer Anordnung gemäß den Merkmalen des Patentanspruchs 6 bzw. 12, wobei die Unteransprüche mindestens zweckmäßige Ausgestaltungen und Weiterbildungen umfassen.

Gemäß dem ersten Grundgedanken der Erfindung werden betriebssystemunabhängige, druckertypische Standardzeichen, enthaltend die jeweilige Nachricht und die Teilnehmernummer des Empfängers, über eine Standardschnittstelle auf ein Interface geführt, wobei das Interface mit einem Controller in Verbindung steht, der die Standarddruckerzeichen in ein SMS-Format des jeweiligen Netzes codiert bzw. umsetzt und dann über ein nachgeschaltetes Mobilfunkmodul das Absetzen der Nachricht an den mindestens einen Teilnehmer veranlaßt bzw. eine solche Nachrichtensendung steuert.

Der Controller besitzt weiterhin die Möglichkeit, intern die Verfügbarkeit des jeweiligen Netzes zu überwachen und selbsttätig das Einloggen in das Netz zu realisieren. Im Bedarfsfall besteht die Möglichkeit, daß über den Controller ein Zwischenspeichern einlaufender Standardzeichennachrichten veranlaßt wird.

Der Controller kann zusätzlich zu den codierten Standarddruckerzeichen ein Anrufsignal zur Identifizierung des jeweiligen Kurznachrichtensenders bereitstellen und unter Rückgriff auf den Empfänger im Mobilfunkmodul ein Quittierungssignal auswerten.

Erfindungsgemäß besteht die Möglichkeit, bei fehlendem Quittierungssignal die Kurznachricht an mindestens einen weiteren, zweiten rufnummerdefinierten Empfänger abzusetzen. Selbstverständlich kann erfindungsgemäß auch das Absetzen der Nachricht an mehrere Teilnehmer, auch in einer vorgegebenen Rang- oder Abfolge, realisiert werden.

Anordnungsseitig ist mindestens eine Standarddrucker-Schnittstelle vorgesehen, die mit einem Interface verbunden ist. Das Interface wiederum ist an eine Controllerbaugruppe angeschlossen, wobei die Controllerbaugruppe eine weitere Schnittstelle zu einem Standard-Mobilfunkmodul mit Funksender und -empfänger besitzt.

Eine zentrale Stromversorgungseinheit steht mit den einzelnen Baugruppen in Verbindung, wobei zusätzlich die Controllerbaugruppe Zugriff auf die Stromversorgungseinheit hat, um vorgegebene oder ausgewählte Versorgungsmodi einzustellen.

Erfindungsgemäß dient das Interface in Verbindung mit einer physikalischen Standardschnittstelle wie z.B. RS232, RS485, Centronics, Internet oder USB, als Übergabeschnittstelle vom bzw. zum übergeordneten System, d.h. der Einrichtung, die die zu übermittelnde Nachricht bereitstellt.

Die Controllerbaugruppe codiert die über die Interfacebaugruppe einlaufenden Texte, d.h. Nachrichten derart, daß diese als SMS-Kurznachrichten im GSM-Netz durch das eingesetzte Mobilfunk (GSM)-Modul übertragen werden können.

Wie beschrieben, realisiert die Controllerbaugruppe die Überwachung der Verfügbarkeit des jeweiligen GSM-Netzes und sorgt dafür, daß bei auftretenden Fehlern eine automatische Wiederholdung der Nachrichtenübermittlung erfolgt, so daß sich die Sicherheit beim Versenden der Nachrichten, die z.B. von speziellen Überwachungseinrichtungen stammt, erhöht.

Dadurch, daß sich die erfindungsgemäße Anordnung nach außen, d.h. zum übergeordneten System, wie ein Standarddrucker zum Ausdruck von ASCII-Zeichen verhält, und notwendige Steuersequenzen wie bei einem Drucker über ESC-Sequenzen übertragen werden, kann die Anordnung an alle über eine Druckerschnittstelle verfügende Geräte angeschlossen und für die Verwendung von SMS-Nachrichten genutzt werden. Selbiges ist völlig unabhängig vom übergeordneten Betriebssystem und besonderen hard- oder softwareseitigen Treibern möglich.

Die erfindungsgemäße Anordnung bereitet die vom übergeordneten, sogenannten Hast-System übertragenen Daten derart auf, daß diese entsprechend dem GSM-Standard in das Telekommunikationsnetz geführt und dort übertragen werden können. Der Controller ist in der Lage, weitere Aufgaben zur Sicherstellung der Verbindung zum GSM-Netz, die Netzverfügbarkeit, Feldstärkeüberwachung, Einloggen in das Netz, Codierung der Nachrichten, Zwischenspeicherung der Nachrichten und so weiter zu übernehmen, ohne daß dies das Host-System belastet oder für dieses sichtbar wird bzw. ohne daß eine spezielle Unterstützung vom Host-System oder eine Bereitstellung von Ressourcen des Host-Systems notwendig werden.

Gemäß dem zweiten Grundgedanken der Erfindung wird bei dem Verfahren bzw. der Anordnung zur Nachrichten- und Daten-Übermittlung mit mindestens zwei, eine Datenübertragungsstrecke bildenden Sender- und Empfängermodulen die Übertragungsqualität einer ersten Hauptübertragungsstrecke laufend oder in vorgegebenen Zeitabständen überwacht, wobei beim Erkennen eines Datenübertragungsausfalls oder beim Vorliegen einer entsprechenden Fehlerrate automatisch mindestens eine zweite Übertragungsstrecke aktiviert wird, wobei dann die Datenquelle und die Datensenke auf die zweite Übertragungsstrecke geschaltet sind. Bevorzugt kann die zweite Datenübertragungsstrecke durch ein
Standardmobilfunk-Telekommunikationsnetz gebildet sein bzw. auf ein solches Netz zurückgreifen. Die erste Datenübertragungsstrecke kann z.B. im ISM-Band arbeiten, wobei die zweite Übertragungsstrecke eine GSM-Verbindung ist. Der zweiten Datenübertragungsstrecke können weitere Kanäle oder Strecken im gleichen Datenübertragungssystem parallel geschaltet werden.

Nach Ablauf einer vorbestimmten Zeit, entweder manuell oder prozeßgesteuert, aber auch parameterabhängig, wird von der zweiten, Nebenübertragungsstrecke auf die Hauptübertragungsstrecke zurückgeschaltet.
Es besteht die Möglichkeit, daß auch beim Betrieb über die Nebenübertragungsstrecke über die Hauptübertragungsstrecke Testdaten versendet werden, um die momentane Übertragungsqualität hinsichtlich eines steigenden oder fallenden Qualitätsgradienten zu überwachen. In dem Moment, wo die Hauptübertragungsstrecke, die in der Regel eine sehr kostengünstige, gebührenfreie Datenübermittlung gestattet, die erforderlichen Qualitätsparameter erneut sichert, wird von der Nebenübertragungsstrecke auf die Hauptübertragungsstrecke zurückgeschaltet.

Anordnungsseitig ist gemäß dem zweiten Grundgedanken der Erfindung sender- und empfängerseitig ein Umschalter vorgesehen, wobei der Umschalter die Datenquelle bzw. die Datensenke vorrangig mit den Sender- und Empfängermodulen einer ersten Datenübertragungsstrecke, jedoch wahlweise mit Einrichtungen zur Standardmobilfunk-Kommunikation unter Aufbau mindestens der vorerwähnten zweiten Datenübertragungsstrecke verbindet. Die Einrichtungen zur Standardmobilfunk-Kommunikation können einen Steuerausgang aufweisen, um den Umschalter parameter- oder zeitabhängig auf die erste Übertragungsstrecke zurückzusetzen.

Die Anordnung gestattet also, alternativ zu einer bestehenden ersten Datenübertragungsstrecke eine zweite alternative Datenübertragung aufzubauen, um so die Datenverbindung zwischen z.B. Hostprozessen aufrechtzuerhalten. Die Anordnung ist so konzipiert, daß erstens alle GSM-spezifischen Eigenschaften und Handlungen übernehmbar sind, um den Datentransfer in GSM-Netzen gemäß dem üblichen Standard sicherzustellen. Zweitens stellt die Anordnung sicher, daß für den eigentlichen Hostprozeß das Umschalten zwischen erster und zweiter bzw. n-ten Datenübertragungsstrecke unbemerkt und störungsfrei abläuft. Die Anordnung trägt auch für eine Rückumschaltung Sorge und ist in der Lage, Energiemanagementfunktionen zu übernehmen, d.h. nur jeweils die notwendigen, für die Datenübertragung momentan relevanten Komponenten mit Spannung bzw. Strom zu versorgen, so daß der Gesamtenergieverbrauch des dualen Systems minimiert werden kann.

Die Erfindung soll nachstehend anhand eines Ausführungsbeispiels sowie unter Zuhilfenahme einer Figur näher erläutert werden.

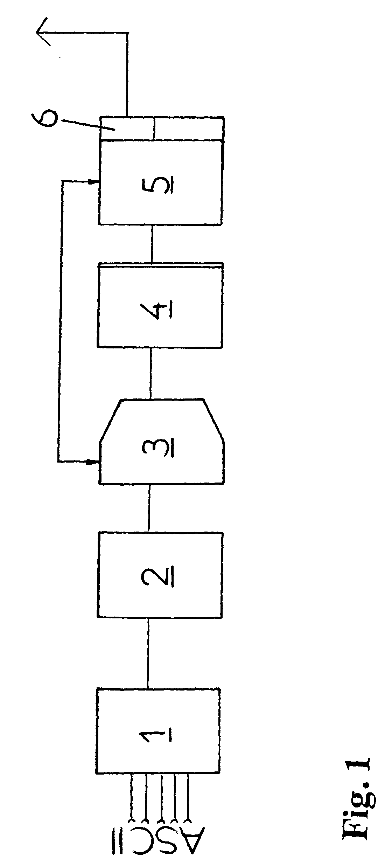

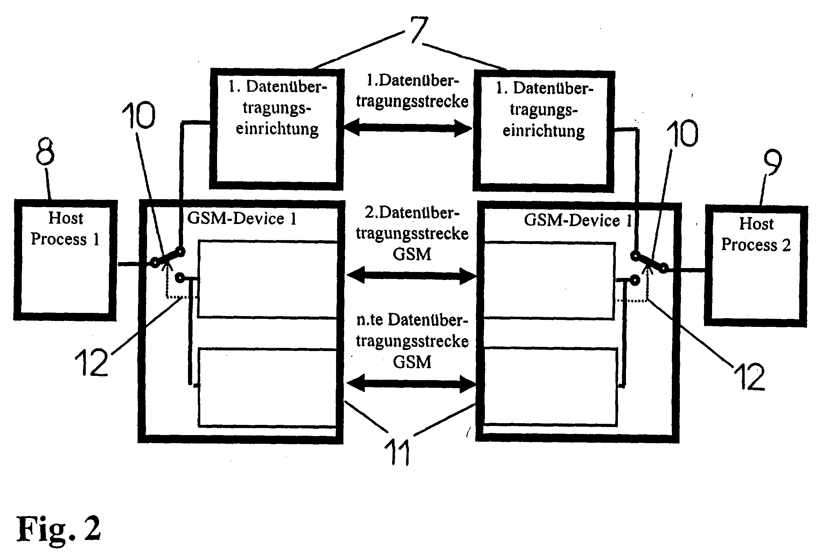

Die Figur 1 zeigt hierbei ein Blockschaltbild der erfindungsgemäßen Anordnung zur Nachrichten-Übermittlung über ein zellulares Standardmobilfunk-Telekommunikationsnetz. Figur 2 stellt ein Blockschaltbild der Anordnung zur quasi dualen Datenübermittlung dar.

Gemäß Fig. 1 steht eine Standard-Druckerschnittstelle 1 mit einem Interface 2 in Verbindung. Das Interface 2 wiederum ist an eine Controllerbaugruppe 3 angeschlossen, wobei die Controllerbaugruppe 3 eine weitere Schnittstelle 4 zu einem Standard-Mobilfunkmodul (GSM-Modul) 5 mit Funksender und -empfänger 6 besitzt.

Über eine Verbindung zwischen dem GSM-Modul 5 hin zum Controller 3 besteht die Möglichkeit, das Einloggen in das jeweilige GSM-Netz zu veranlassen und/oder die Verfügbarkeit des Netzes, z.B. durch Feldstärkeüberwachung zu überprüfen.

Eine zentrale Stromversorgungseinheit (nicht gezeigt) ist mit den einzelnen Baugruppen oder Baueinheiten verbunden, wobei zusätzlich der Controller als Master Zugriff auf die Stromversorgungseinheit hat, so daß ausgewählte Versorgungsmodi gewählt, bereitgestellt oder auf solche Modi umgeschaltet werden können.

Die gemäß Ausführungsbeispiel beschriebene Anordnung dient der Übertragung von SMS-Nachrichten z.B. im GSM 900-Netz. Derartige Funktionen werden sowohl vom D1- als auch vom D2-Netz unterstützt.

Die Anordnung nach Figur 1 ist selbstkonfigurierend aufgebaut und nach Anlegen der Versorgungsspannung betriebsbereit, wobei nach interner Systemprüfung das GSM-Modul 5 im Netz angemeldet wird.

Über die Druckerschnittstelle 1 werden alle benötigten Informationen als ASCII-Texte der Anordnung zugeführt. Konfigurationsseitig ist ausschließlich die PIN (Personal Identification Number) für den Netzzugang erforderlich.

Die PIN ist nur bei Inbetriebnahme oder einer Änderung des Netzzugangs in Form einer zusätzlichen Steueranweisung der Anordnung zu übergeben. Ansonsten ist diese Information nicht flüchtig und nicht rücklesbar in der Anordnung gespeichert.

Dadurch, daß das Protokoll der Anordnung textbasierend ist, sind keine speziellen Kenntnisse von Steuerbefehlen oder dergleichen erforderlich. Auch kann ein spezieller Treiber für das übergeordnete, sogenannte Host-System entfallen.

Die Anordnung gemäß Ausführungsbeispiel nach Fig. 1 kann über bis zu vier unabhängige Eingangsschnittstellen verfügen, wobei jede Schnittstelle einen eigenen Datenpuffer aufweist, so daß von unterschiedlichen Quellen Daten empfangen und als Nachrichten weitergeleitet werden können.

Die zu sendende Nachricht wird zusammen mit der Teilnehmer- oder Empfängernummer zur Anordnung übertragen, wobei folgende Betriebsmodi unterstützt werden.

Es wird die jeweilige Nachricht zur angegebenen Rufnummer übertragen, wobei keine Überprüfung und/oder Bestätigung hinsichtlich des Empfangs bzw. des Eingangs der Nachricht beim Empfänger erfolgt.

Es wird die jeweilige Nachricht an die angegebene Teilnehmer- oder Rufnummer übertragen, wobei zusätzlich ein Anruf zum Empfänger aufgebaut wird. Dieser Anruf erfolgt gemeinsam mit der Übertragung der Rufnummer des Senders, womit anhand dieser Kennzeichnung eine leichte Identifizierung möglich ist. Der Anruf selbst dient als Aufmerksamkeitssignal, z.B. für Servicepersonal, und wird nicht zur Informationsübermittlung genutzt, d.h. es wird keine echte Verbindung, die gebührenpflichtig ist, aufgebaut.

In einer weiteren Betriebsvariante wird die Nachricht an die angegebene Rufnummer abgesetzt, wobei überprüft wird, ob innerhalb einer einstellbaren Zeitspanne sich der Empfänger mit einem Rückruf bei der Sendeanordnung meldet. Die entsprechende Identifizierung erfolgt wieder über die Teilnehmerrufnummern, wobei auch hier keine Verbindung aufgebaut wird und keine Verbindungskosten entstehen. Wird ein Fehlen des Rückrufs ermittelt, besteht die Möglichkeit, daß die Anordnung die Sendung wiederholt oder die entsprechende Nachricht an einen oder mehrere weitere Teilnehmer absetzt.

Alternativ kann dafür Sorge getragen werden, daß zwei oder mehreren Teilnehmern parallel oder zeitlich versetzt die gewünschte Nachricht zugestellt wird, ohne daß eine Quittierung erfolgt.

Die Einstellung der jeweiligen Betriebsart erfolgt über optionale Parameter im eigentlichen Nachrichtenformat. Jede Nachricht kann in einem anderen Modus übertragen werden, so daß sich unterschiedliche Prioritäten für die zu übermittelnden Einzelnachrichten festlegen lassen. Damit entscheidet das übergeordnete System über die Priorität, d.h. die Wichtigkeit, und die Wahl des Empfängers der Übertragung.

Die typische Textlänge, die über die serielle Schnittstelle der Anordnung eingegeben werden kann, umfaßt bei Nutzung aller 160 Zeichen 180 bis 230 Zeichen.

Das Verfahren und die Anordnung zur Nachrichten- und Daten-Übermittlung nach Art eines quasi dualen Systems zur Sicherstellung der Datenübertragungsqualität unter ganz unterschiedlichen Betriebsbedingungen sei anhand des Blockschaltbilds nach Figur 2 wie folgt erläutert.

Im üblichen Betrieb sind eine Datenquelle 8 und eine Datensenke 9 mittels Sender- und Empfängerbaugruppen 7 über eine erste Datenübertragungsstrecke verbunden und in der Lage, auch bidirektional Daten auszutauschen. Diese erste Datenübertragungsstrecke zwischen den Modulen 7 kann beispielsweise eine ISM-Funkverbindung im 433 MHz-Band sein.

Wenn die Qualität der ersten Datenübertragungsstrecke nachläßt, indem beispielsweise eine ansteigende Fehlerrate oder ein Datenübertragungsausfall festgestellt wurde, besteht die Möglichkeit, automatisch, aber auch manuell einen Umschalter 10 zu aktivieren, der dann eine zweite Datenübertragungsstrecke, z.B. über ein GSM-Netz aufbaut. Es wird also in diesem Fall mit oder nach Umschalten eine Aktivierung von Einrichtungen 11 zur Standardmobilfunk-Kommunikation vorgenommen. Die einzelnen Einheiten zur Standardmobilfunk-Kommunikation können einen Steuerausgang besitzen, der mit dem jeweiligen Umschalter 10 zusammenwirkt, um zeit- oder parameterabhängig ein Zurückschalten auf die erste, in der Regel kostengünstigere Datenübertragungsstrecke, die als Hauptübermittlungsweg fungiert, zu veranlassen.

Eine Anwendung der mit der Figur 2 prinzipiell dargestellten Anordnung ergibt sich beispielsweise im geodätischen Vermessungswesen. Dort wird zur Übertragung von DGPS-Daten bevorzugt eine Funkverbindung im 433 MHz ISM-Band genutzt. Eine Basisstation ist quasi ortsfest und eine zweite Station mobil, um die Vermessungspunkte aufzunehmen. Diese Art der Datenübertragung im ISM-Band ist sehr kostengünstig, da keine datenvolumen- und/oder zeitabhängige Gebühren anfallen. Wesentlicher Nachteil ist jedoch, daß je nach topologischen Gegebenheiten eine sichere Funkverbindung mit den derzeit zugelassenen Geräten nur in einem relativ geringen Entfernungsbereich von etwa 1 bis 6 km möglich ist.

Wird dieser Entfernungsbereich oder Reichweitebereich überschritten, reißt die Funkverbindung und damit die Datenübertragung ab, der Vermesser muß zurück zur Basisstation und diese auf einen neuen, quasi stationären Festpunkt nachsetzen. Es ist zwar der Einsatz der GSM-Technik zur DGPS-Datenübertragung prinzipiell möglich, jedoch mit erheblichen Kosten verbunden, da die Datenübertragung oft über Stunden permanent bestehen muß. Die Nutzung des dualen Systems gemäß der vorgestellten Anordnung erreicht eine Kostenoptimierung, weil im Nahbereich die direkte Funkverbindung im ISM-Netz zum Einsatz kommt und in problematischen Fällen, z.B. beim Überschreiten der Reichweite der Standard-Funkverbindung, dem Auftreten von Abschattung oder ähnlichen temporär auf eine sichere, in dem Moment aber kostenintensivere GSM-Verbindung umgeschaltet werden kann. Ein Nachsetzen der Basisstation ist nicht mehr oder nur noch seltener notwendig. Andererseits fallen im Nahbereich der Basisstation, der den größten Anteil der Vermessungspunkte ausmacht, keine Übertragungskosten an. Durch das automatische Handling der Übertragungsstrecken 2 bis n wird die Handhabung sehr einfach, da der Nutzer keine Unterschiede zur gewohnten Funktechnik erkennt.

Eine Erweiterung auf n-Übertragungsstrecken bei der GSM-Übertragung ist sinnvoll, da bei einer klassischen Funkverbindung für DGPS die Basisstation nur als Sender fungiert und mehrere mobile Vermesser diese Signale empfangen und nutzen können. Bei der vorgestellten alternativen GSM-Übertragung ist prinzipiell nur eine Punkt-zu-Punkt-Verbindung möglich. Durch den Aufbau mehrerer GSM-Strecken, z.B. sechs Strecken mit der gleichen Rufnummer bei Rufnummernweiterschaltung, können mehrere Vermesser die DGPS-Daten einer Basisstation gleichzeitig nutzen.

### Bezugszeichenliste

- 1: Druckerschnittstelle
- 2: Interface
- 3: Controllerbaugruppe
- 4: Schnittstelle des Controllers
- 5: GSM-Modul
- 6: Funksender und -empfänger des GSM-Moduls
- 7: Sender/Empfängerbaugruppe der ersten Datenübertragungsstrecke
- 8: Datenquelle
- 9: Datensenke
- 10: Umschalter
- 11: Einrichtungen zur Standardmobilfunk-Kommunikation
- 12: Steuerausgang

## Patentansprüche

1. Verfahren zur Nachrichten- und Daten-Übermittlung über ein zellulares Standardmobilfunk-Telekommunikationsnetz, insbesondere GSM-System, mit einem Sender- oder Sender- und EmpfängerMobilfunkmodul,
dadurch gekennzeichnet, daß
betriebssystemunabhängig druckertypische Standardzeichen, enthaltend die jeweilige Nachricht und die Teilnehmernummer des Empfängers, mittels einer entsprechenden üblichen Schnittstelle auf ein Interface geführt werden, wobei die ausgangsseitig des Interface anliegenden Zeichen durch einen Controller in ein SMS-Format des jeweiligen Netzes codiert und über das Mobilfunkmodul an mindestens einen Teilnehmer gesendet werden.

2. Verfahren nach Anspruch 1,
dadurch gekennzeichnet, daß
der Controller intern die Verfügbarkeit des jeweiligen Netzes überwacht, das Einloggen in das Netz realisiert und im Bedarfsfall das Zwischenspeichern einlaufender Standardzeichen-Nachrichten veranlaßt.

3. Verfahren nach Anspruch 1 oder 2,
dadurch gekennzeichnet, daß
der Controller zusätzlich zu den codierten Standarddruckerzeichen ein Anrufsignal zur Identifizierung des jeweiligen Kurznachrichtensenders bereitstellt.

4. Verfahren nach einem der vorangegangenen Ansprüche,
dadurch gekennzeichnet, daß
mittels des Empfängers im Mobilfunkmodul und durch den Controller ein Empfangsbestätigungs- oder Quittierungssignal ausgewertet und bei fehlendem Quittierungssignal die Kurznachricht an mindestens einen zweiten rufnummerdefinierten Empfänger gesendet wird.

5. Verfahren nach Anspruch 4,
dadurch gekennzeichnet, daß
die Zweitsendung nach ergebnislosem Ablauf einer einstellbaren Quittungszeit ausgelöst wird.

6. Anordnung zur Kurznachrichten-Übermittlung über ein zellulares Standardmobilfunk-Telekommunikationsnetz, insbesondere GSM-System, mit einem-Sender- oder Sender- und Empfänger-Mobilfunkmodul,
dadurch gekennzeichnet, daß
mindestens eine Standard-Druckerschnittstelle (1) mit einem Interface (2) verbunden und das Interface (2) an eine Controllerbaugruppe (3) angeschlossen ist, wobei die Controllerbaugruppe (3) eine weitere Schnittstelle (4) zu einem Standard-Mobilfunkmodul (5) mit Funksender und -empfänger (6) besitzt.

7. Anordnung nach Anspruch 6,
gekennzeichnet durch
eine zentrale Stromversorgungseinheit, wobei die Controllerbaugruppe Zugriff auf die Stromversorgungseinheit zum Einstellen vorgegebener oder ausgewählter Versorgungsmodi besitzt.

8. Verfahren zur Nachrichten- und Daten-Übermittlung über ein zellulares Standardmobilfunk-Telekommunikationsnetz, insbesondere GSM-System, mit mindestens zwei eine Datenübertragungsstrecke bildenden Sender- und Empfängermodulen,
dadurch gekennzeichnet, daß
die Übertragungsqualität einer ersten Hauptübertragungsstrecke überwacht wird, wobei beim Erkennen eines Datenübertragungsausfalls oder einer signifikanten Qualitätsreduktion bevorzugt automatisch mindestens eine zweite Übertragungsstrecke aktiviert wird, wobei dann die Datenquelle und die Datensenke auf die zweite Datenübertragungsstrecke geschaltet sind.

9. Verfahren nach Anspruch 8,
dadurch gekennzeichnet, daß
nach Ablauf einer vorbestimmten Zeit manuell oder prozeßgesteuert von der zweiten, Nebenübertragungsstrecke auf die erste, Hauptübertragungsstrecke zurückgeschaltet wird.

10. Verfahren nach Anspruch 8,
dadurch gekennzeichnet, daß
parallel zum Betrieb der Nebenübertragungsstrecke Testdaten über die Hauptübertragungsstrecke versandt werden, wobei mit dem Erreichen oder Wiedererreichen der erforderlichen Übertragungsqualität von der Neben- auf die Hauptübertragungsstrecke zurückgeschaltet wird.

11. Verfahren nach einem der Ansprüche 8 bis 10,
dadurch gekennzeichnet, daß
für die zweite bis n-te zeitweilig aktivierte Nebenübertragungsstrecke auf ein öffentliches Mobilfunknetz zurückgegriffen wird.

12. Anordnung zur Nachrichten- und Daten-Übermittlung über ein zellulares Standardmobilfunk-Telekommunikationsnetz, inbesondere GSM-System, mit mindestens zwei eine Datenübertragungsstrecke bildenden Sender- und Empfängermodulen sowie mit einer Datenquelle und einer Datensenke,
dadurch gekennzeichnet, daß
sender- und empfängerseitig ein Umschalter vorgesehen ist, wobei der Umschalter die Datenquelle/Senke vorrangig mit dem Sender- und Empfängermodul einer ersten Datenübertragungsstrecke, jedoch wahlweise mit Einrichtungen zur Standardmobilfunk-Kommunikation unter Aufbau mindestens einer zweiten Datenübertragungsstrecke verbindet.

13. Anordnung nach Anspruch 12,
dadurch gekennzeichnet, daß
die Einrichtungen zur Standardmobilfunk-Kommunikation einen Steuerausgang aufweisen, um die Umschalter parameter- oder zeitabhängig auf die erste Übertragungsstrecke zurückzuschalten.
